(19) **Europäisches Patentamt**
**European Patent Office**
**Office européen des brevets**

(11) **EP 3 156 303 A1**

(12) **EUROPEAN PATENT APPLICATION**
published in accordance with Art. 153(4) EPC

(43) Date of publication:
**19.04.2017 Bulletin 2017/16**

(51) Int Cl.:
**B61L 27/00** *(2006.01)* **B60L 15/40** *(2006.01)*

(21) Application number: **15805991.5**

(22) Date of filing: **04.06.2015**

(86) International application number:
**PCT/JP2015/066259**

(87) International publication number:
**WO 2015/190401 (17.12.2015 Gazette 2015/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **11.06.2014 JP 2014120891**

(71) Applicant: **Kabushiki Kaisha Toshiba**
**Minato-ku**
**Tokyo 105-8001 (JP)**

(72) Inventors:
• **SAMEDA, Yoshito**
  **Tokyo 105-8001 (JP)**
• **SUZUKI, Tatsunori**
  **Tokyo 105-8001 (JP)**

(74) Representative: **Awapatent AB**
**Junkersgatan 1**
**582 35 Linköping (SE)**

(54) **INFORMATION PROCESSING DEVICE AND OPERATION CURVE GENERATION METHOD**

(57)     An information processing device in an embodiment includes a storage and an operation curve generator. The storage stores therein linear data including a slope and a curve for each set of certain locations, and train data including an acceleration-deceleration characteristic. The operation curve generator sets a plurality of deceleration section candidates on the basis of information about the set of certain locations stored in the storage, obtains, for each of the deceleration section candidates, a change rate of energy consumption when the deceleration is performed by a certain speed using a preset operation curve, the linear data, and the train data, selects the section in which the change rate of energy consumption in the obtained change rates of energy consumption is the largest from the deceleration section candidates, and updates the preset operation curve utilizing the selected deceleration section and the certain speed.

FIG.1

**Description**

FIELD

Embodiments of the present invention relate to an information processing device and an operation curve generation method.

BACKGROUND

Conventionally, a technique is available that saves energy by changing a certain operation curve between stations (e.g., an operation curve that can achieve running between the stations in a shortest running time) when there is a margin (hereinafter, described as a margin time) for a running time of the train running between the stations. Specifically, in the conventional technique, a section where a train is caused to perform inertial running is extended in a plurality of sections divided between the stations to generate an operation curve in which a margin time is distributed in a running time of a train.

CITATION LIST

Patent Literature

Patent Document 1: Japanese Patent No. 3881302

SUMMARY OF THE INVENTION

Problem to be Solved by the Invention

The operation curve in which the section where the train is caused to perform the inertial running is extended, however, does not always achieve sufficient energy saving.

Means for Solving Problem

An information processing device in an embodiment includes a storage and an operation curve generator. The storage stores therein linear data including a slope and a curve for each set of certain locations, and train data including an acceleration-deceleration characteristic. The operation curve generator sets a plurality of deceleration section candidates on the basis of information about the set of certain locations stored in the storage, obtains, for each of the deceleration section candidates, a change rate of energy consumption when the deceleration is performed by a certain speed using a preset operation curve, the linear data, and the train data, selects the section in which the change rate of energy consumption in the obtained change rates of energy consumption is the largest from the deceleration section candidates, and updates the preset operation curve utilizing the selected deceleration section and the certain speed.

BRIEF DESCRIPTION OF DRAWINGS

FIG. 1 is a block diagram illustrating a structure of an operation curve generation system having an operation curve generation device according to a first embodiment.
FIG. 2 is a flowchart illustrating an outline of a flow of the processing performed by the operation curve generation device according to the first embodiment to generate an energy saving operation curve.
FIG. 3 is a schematic diagram illustrating an example of a fastest operation curve generated by a fastest operation curve generation device according to the first embodiment.
FIG. 4 is a flowchart illustrating a flow of the processing performed by the operation curve generation device according to the first embodiment to detect a deceleration energy saving range.
FIG. 5A is a schematic diagram for explaining the processing performed by the operation curve generation device according to the first embodiment to generate an energy saving operation curve.
FIG. 5B is another schematic diagram for explaining the processing performed by the operation curve generation device according to the first embodiment to generate the energy saving operation curve.
FIG. 6 is a flowchart illustrating a flow of the processing performed by the operation curve generation device according to a second embodiment to detect the deceleration energy saving range.

FIG. 7A is a schematic diagram for explaining the processing performed by the operation curve generation device according to the second embodiment to generate the energy saving operation curve.

FIG. 7B is another schematic diagram for explaining the processing performed by the operation curve generation device according to the second embodiment to generate the energy saving operation curve.

FIG. 8 is a schematic diagram illustrating an example of the energy saving operation curve generated by the operation curve generation device according to the second embodiment.

FIG. 9A is a schematic diagram for explaining the processing performed by the operation curve generation device according to a third embodiment to generate the energy saving operation curve.

FIG. 9B is another schematic diagram for explaining the processing performed by the operation curve generation device according to the third embodiment to generate the energy saving operation curve.

FIG. 10 is a flowchart illustrating a flow of the processing performed by the operation curve generation device according to a fourth embodiment to detect the deceleration energy saving range.

FIG. 11A is a schematic diagram illustrating a relation between a second energy saving sensitivity obtained by the operation curve generation device according to the fourth embodiment and a running distance of a train.

FIG. 11B is another schematic diagram illustrating a relation between the second energy saving sensitivity obtained by the operation curve generation device according to the fourth embodiment and the running distance of the train.

FIG. 12 is a block diagram illustrating a structure of an operation curve generation system having an operation curve generation device according to a fifth embodiment.

FIG. 13 is a flowchart illustrating an outline of a flow of the processing performed by the operation curve generation device according to the fifth embodiment to generate the energy saving operation curve.

FIG. 14 is a flowchart illustrating a flow of the processing performed by the solution candidate calculator included in the operation curve generation device according to the fifth embodiment to obtain solution candidates.

FIG. 15 is a flowchart illustrating a flow of the processing performed by the solution candidate selector included in the operation curve generation device according to the fifth embodiment to select the solution candidate.

FIG. 16A is a schematic diagram illustrating an example of the section boundary speeds at the respective boundaries obtained by the solution candidate calculator included in the operation curve generation device according to the fifth embodiment.

FIG. 16B is another schematic diagram illustrating an example of the section boundary speeds at the respective boundaries obtained by the solution candidate calculator included in the operation curve generation device according to the fifth embodiment.

## DETAILED DESCRIPTION

The following describes an operation curve generation device to which an information processing device and an operation curve generation method according to embodiments are applied with reference to the accompanying drawings.

First Embodiment

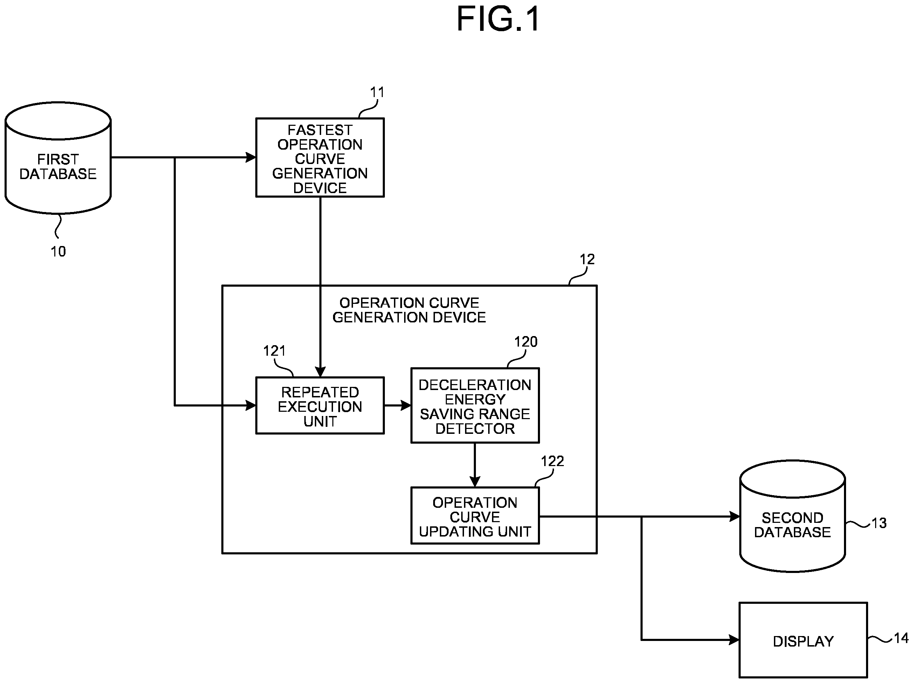

FIG. 1 is a block diagram illustrating a structure of an operation curve generation system having an operation curve generation device according to a first embodiment.

As illustrated in FIG. 1, the operation curve generation system according to the embodiment includes a first database 10, a fastest operation curve generation device 11, an operation curve generation device 12, a second database 13, and a display 14.

The first database 10 (an example of the storage) stores therein a maximum total running time (an example of a certain longest permissible running time) that is a certain longest running time permissible for the running of a train between stations (e.g., between locations), linear data (e.g., slopes and curves) for each set of stations, and train data (e.g., resistance and an acceleration-deceleration characteristic in running) including car data about cars coupled in the train running between the stations.

The fastest operation curve generation device 11 generates an operation curve (hereinafter, described as a fastest operation curve) that allows a train to run fastest between the stations, in other words, in a shortest time, on the basis of the linear data and the train data that are stored in the first database 10.

The second database 13 stores therein an operation curve (hereinafter, described as an energy saving operation curve) that is generated by the operation curve generation device 12, which is described later. The display 14 can display the energy saving operation curve generated by the operation curve generation device 12, which is described later.

The operation curve generation device 12 (an example of the information processing device) generates the energy saving operation curve that saves energy consumption of the train running between the stations using the maximum total running time, the linear data, and the train data that are stored in the first database 10 and a certain operation curve (e.g., the fastest operation curve) serving as an example of the preset operation curve. In the embodiment, as illustrated in FIG. 1, the operation curve generation device 12 includes a deceleration energy saving range detector 120, a repeated execution unit 121, and an operation curve updating unit 122. In the embodiment, the first database 10 (an example of the storage) and the fastest operation curve generation device 11 are provided outside the operation curve generation device 12. The operation curve generation device 12, however, may include the first database 10 and the fastest operation curve generation device 11.

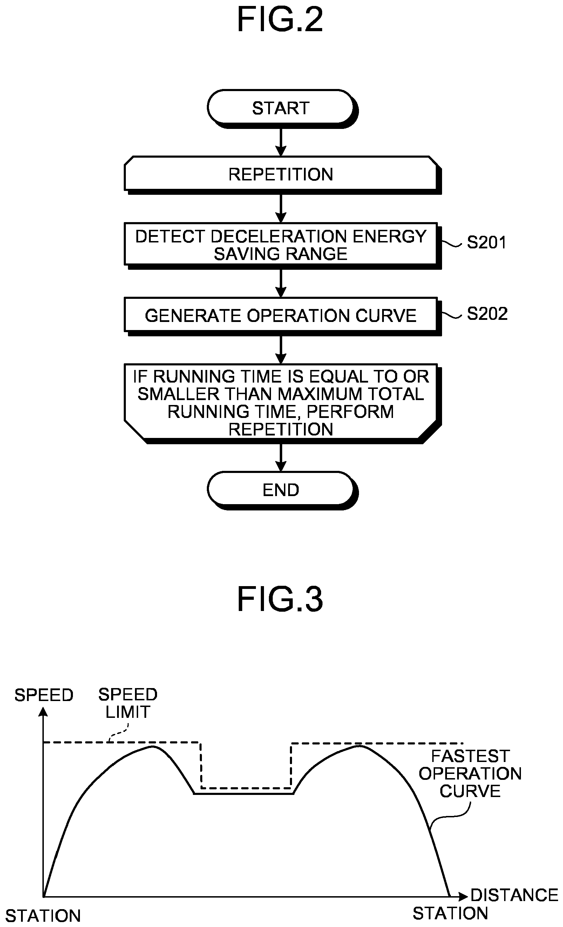

The following describes an outline of a flow of processing performed by the operation curve generation device 12 according to the embodiment to generate the energy saving operation curve with reference to FIGS. 1 to 3. FIG. 2 is a flowchart illustrating the outline of the flow of the processing performed by the operation curve generation device according to the first embodiment to generate the energy saving operation curve. FIG. 3 is a schematic diagram illustrating an example of the fastest operation curve generated by the fastest operation curve generation device according to the first embodiment. Specifically, in FIG. 3, the ordinate axis represents a speed of a train while the abscissa axis represents a running distance of the train between the stations. The fastest operation curve illustrated in FIG. 3 represents a relation between the running distance and the speed of the train running between the stations.

When the generation of the energy saving operation curve is instructed, the repeated execution unit 121 acquires, from the first database 10, the maximum total running time, the linear data, and the train data. The repeated execution unit 121 further acquires a certain operation curve of the train running between the stations. In the embodiment, when generating the energy saving operation curve first from the receiving of the instruction to generate the energy saving operation curve, the repeated execution unit 121 acquires the fastest operation curve generated by the fastest operation curve generation device 11 (refer to FIG. 3) as the certain operation curve. As illustrated in FIG. 3, the fastest operation curve is the operation curve that allows the train to run fastest between the stations with a speed equal to or smaller than a preset speed limit.

The repeated execution unit 121 inputs the acquired linear data, train data, and fastest operation curve to the deceleration energy saving range detector 120. The repeated execution unit 121, thus, instructs the deceleration energy saving range detector 120 and the operation curve updating unit 122 to generate the energy saving operation curve.

When being instructed to generate the energy saving operation curve, the deceleration energy saving range detector 120 obtains an energy saving sensitivity (an example of a first change rate) for each of a plurality of deceleration target ranges (in the embodiment, a plurality of individual or consecutive sections out of a plurality of sections divided between the stations) serving as a plurality of deceleration section candidates on the basis of the received linear data and train data. The energy saving sensitivity is a change rate of energy consumption when the train is decelerated by a certain speed using the fastest operation curve as a reference (i.e., the energy consumption when the train is decelerated by a certain speed using the fastest operation curve serving as an example of the certain operation curve, the linear data, and the train data). The deceleration energy saving range detector 120 detects (selects) the deceleration target range having the highest energy saving sensitivity out of the multiple deceleration target ranges as a deceleration energy saving range (an example of the deceleration section) (step S201). In the embodiment, the deceleration energy saving range is selected in accordance with the energy saving sensitivity of each of the deceleration target ranges obtained by the deceleration energy saving range detector 120 included in the operation curve generation device 12. The way of selecting the deceleration energy saving range is not limited to this way. For example, the deceleration energy saving range may be selected in accordance with the energy saving sensitivity of each of the deceleration target ranges obtained by an external device. In the embodiment, a plurality of individual or consecutive sections out of a plurality of sections divided between the stations are selected as the deceleration target ranges. The deceleration target ranges are not limited to those described above. For example, the deceleration target ranges may be respective multiple sections between the stations set by a user via an operation unit, which is not illustrated. For another example, the deceleration target ranges may be respective multiple sections between the stations set by an external device.

The operation curve updating unit 122 generates the energy saving operation curve, which is the operation curve when the train runs by being decelerated by a certain speed using the fastest operation curve as a reference in the deceleration energy saving range detected by the deceleration energy saving range detector 120 (step S202). In other words, the operation curve updating unit 122 updates the certain operation curve utilizing the selected deceleration section and the certain speed. The operation curve updating unit 122 updates the energy saving operation curve stored in the second database 13 with the generated energy saving operation curve and causes the display 14 to display the generated energy saving operation curve. When the certain speed cannot be used for generating the energy saving operation curve without any change such as a case in which the resulting time after the deceleration by the certain speed exceeds a margin time in generation of the energy saving operation curve, the certain speed is not used without any change. For example, a corrected value such as a value half the certain speed may be used.

The repeated execution unit 121 calculates a running time (hereinafter, described as a total running time) of the train running between the stations on the basis of the generated energy saving operation curve every time the energy saving operation curve is generated by the operation curve updating unit 122. When the calculated total running time is equal to or smaller than the maximum total running time, the repeated execution unit 121 causes the deceleration energy saving range detector 120 and the operation curve updating unit 122 to repeat the generation (updating) processing of the energy saving operation curve using the energy saving operation curve generated last as the certain operation curve until the calculated total running time reaches the maximum total running time. In the embodiment, the deceleration energy saving range detector 120, the repeated execution unit 121, and the operation curve updating unit 122 function as an example of the generator that performs the generation processing of the energy saving operation curve.

As described above, the generation of the energy saving operation curve is repeated until the total running time of the train running between the stations reaches the maximum total running time using the fastest operation curve as a reference. As a result, the energy saving operation curve can be obtained that achieves the most energy saving.

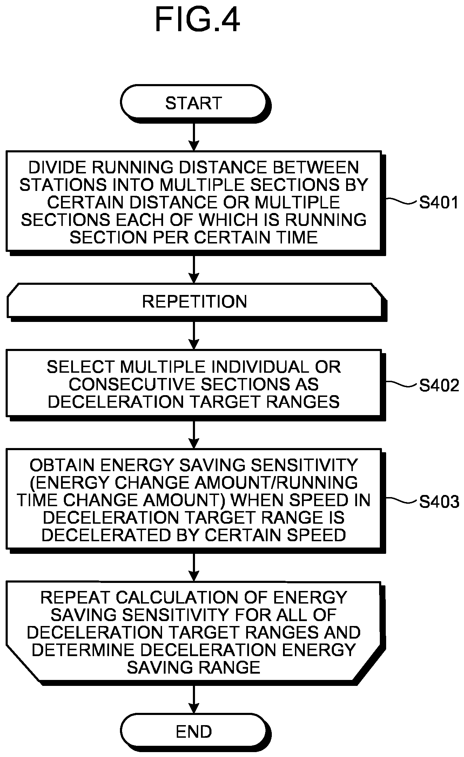

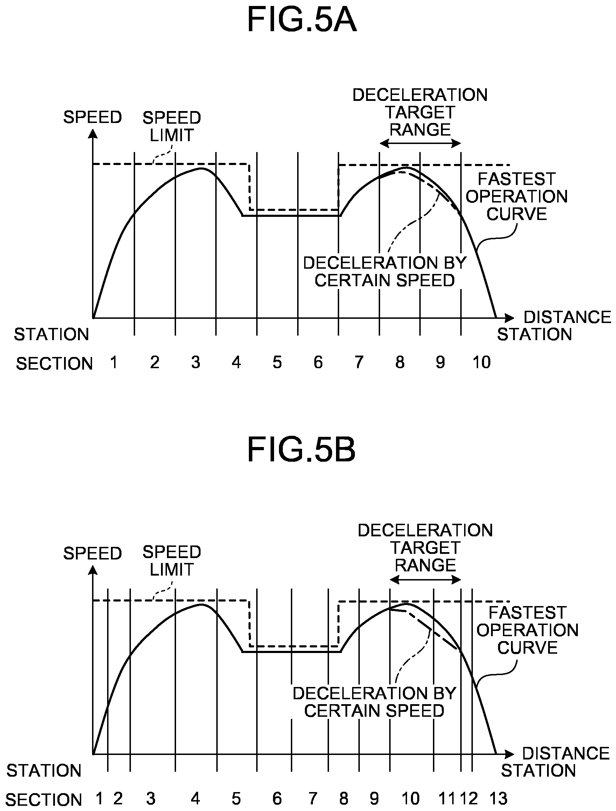

The following describes the processing performed by the operation curve generation device 12 according to the embodiment to detect the deceleration energy saving range (step S201 in FIG. 2) with reference to FIGS. 4, 5A, and 5B. FIG. 4 is a flowchart illustrating a flow of the processing performed by the operation curve generation device according to the first embodiment to detect the deceleration energy saving range. FIGS. 5A and 5B are schematic diagrams for explaining the processing performed by the operation curve generation device according to the first embodiment to generate the energy saving operation curve. Specifically, in each of FIGS. 5A and 5B, the ordinate axis represents the speed of the train while the abscissa axis represents a running distance of the train running between the stations. The fastest operation curve illustrated in each of FIGS. 5A and 5B represents a relation between the running distance and the speed of the train running between the stations.

As illustrated in FIG. 5A, the deceleration energy saving range detector 120 divides the running distance between the stations into a plurality of sections (e.g., sections 1 to 10) by a certain distance (e.g., 10 m) (step S401). Alternatively, as illustrated in FIG. 5B, the deceleration energy saving range detector 120 divides the running distance between the stations into a plurality of sections (e.g., sections 1 to 13) each serving as a running section per a certain time (hereinafter, described as a certain running time, e.g., one second) when the train runs in accordance with the certain operation curve (step S401).

The deceleration energy saving range detector 120 sets the individual or consecutive sections in the multiple sections divided between the stations to be the deceleration target ranges in each of which the energy saving sensitivity is obtained (step S402). The deceleration energy saving range detector 120 sets a plurality of deceleration target ranges on the basis of the linear data (an example of the information about a set of locations) stored in the first database 10 for each set of stations. The deceleration energy saving range detector 120 obtains the energy saving sensitivity when the speed of the train is decelerated by a certain speed (e.g., 0.1 km/h) using the certain operation curve as a reference in each deceleration target range (step S403).

Specifically, the deceleration energy saving range detector 120 calculates the energy saving sensitivity on the basis of the following expression (1).

$$\text{Energy saving sensitivity = energy change amount}$$
$$\text{(J)/running time change amount (second)} \qquad (1)$$

The energy change amount is a difference between the energy consumption when the train runs in the deceleration target range in accordance with the certain operation curve and the energy consumption when the train runs in the deceleration target range by being decelerated by a certain speed using the certain operation curve as a reference.

The running time change amount is a difference between the running time when the train runs in the deceleration target range in accordance with the certain operation curve and the running time when the train runs in the deceleration target range by being decelerated by the certain speed using the certain operation curve as a reference.

In the embodiment, the deceleration energy saving range detector 120 obtains the energy saving sensitivity when the speed of the train in the deceleration target range is decelerated by a single certain speed (e.g., 0.1 km/h) using the certain operation curve as a reference.
The deceleration energy saving range detector 120 may obtain the energy saving sensitivity for each case in which the speed of the train in the deceleration target range is decelerated by one of a plurality of certain speeds (e.g., 0.1 km/h, 0.2 km/h, and 0.5 km/h) using the certain operation curve as a reference. The deceleration energy saving range detector 120, then, may determine the highest energy saving sensitivity out of the energy saving sensitivities obtained for the respective certain speeds to be the energy saving sensitivity in the deceleration target range.

The deceleration energy saving range detector 120 repeats the calculation of the energy saving sensitivity for all of the multiple deceleration target ranges. The deceleration energy saving range detector 120 determines the deceleration target range having the highest calculated energy saving sensitivity out of the multiple deceleration target ranges to be the deceleration energy saving range. For example, in the example illustrated in FIG. 5A, the deceleration energy saving range detector 120 determines the deceleration target range including the two consecutive sections 8 and 9 to be the deceleration target range out of the sections 1 to 10 divided between the stations by a certain distance. For another example, in the example illustrated in FIG. 5B, the deceleration energy saving range detector 120 determines the deceleration target range including the two consecutive sections 10 and 11 to be the deceleration target range out of the sections 1 to 13, each of which is the running section per a certain running time when the train runs in accordance with the fastest operation curve.

As described above, the operation curve generation device 12 according to the first embodiment can reduce the energy consumption by decelerating the train in the section where the energy saving sensitivity is high between the stations, thereby making it possible to achieve sufficient energy saving.

Second Embodiment

A second embodiment is an example where the energy saving sensitivity is obtained for only certain deceleration target ranges out of the multiple deceleration target ranges. In the following description, the description of the same part as the first embodiment is omitted.

In the second embodiment, the deceleration energy saving range detector 120 obtains the energy saving sensitivity for only certain deceleration target ranges (examples of certain deceleration target range candidates) out of the multiple deceleration target ranges. The deceleration energy saving range detector 120, thus, does not need to obtain the energy saving sensitivity for each of the deceleration target ranges other than the certain deceleration target ranges in the multiple deceleration target ranges. As a result, a processing load on the operation curve generation device 12 for processing to obtain the energy saving sensitivities can be reduced.

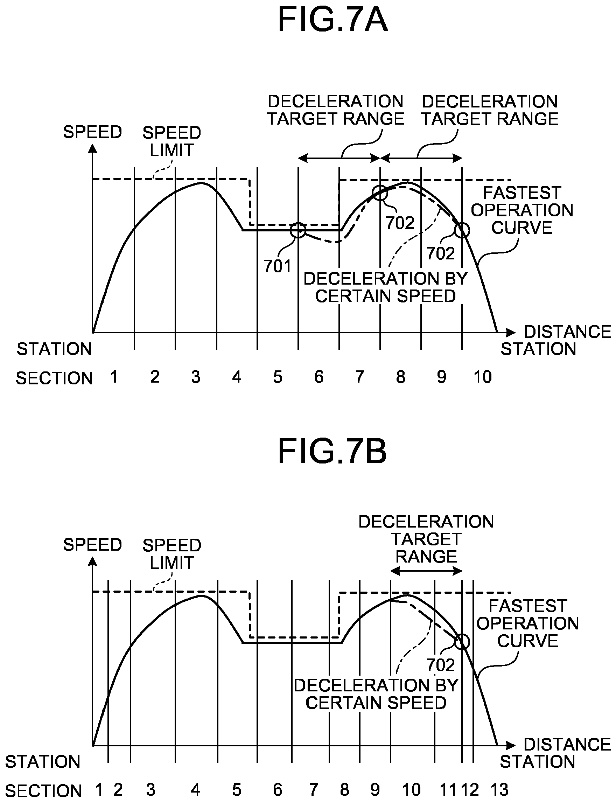

In the embodiment, the deceleration energy saving range detector 120 obtains the energy saving sensitivity when first processing and second processing are performed using the certain operation curve (e.g., the fastest operation curve) as a reference. In the first processing, the speed of the train is gradually decelerated from a start (e.g., the start of the section 6 indicated with a numeral 701 in FIG. 7 in the fastest operation curve) of the deceleration target range. In the second processing, the speed of the train is gradually recovered towards an end (e.g., the ends of the sections 7 and 8 each indicated with a numeral 702 in FIG. 7 in the fastest operation curve) of the deceleration target range. As a result, the energy saving sensitivity can be obtained in the deceleration target range on the basis of the actual deceleration and recovery of the speed of the train.

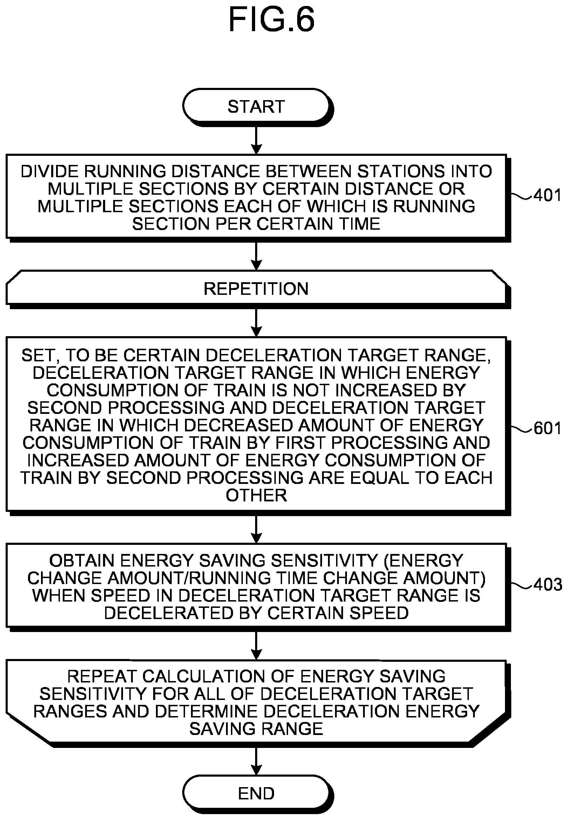

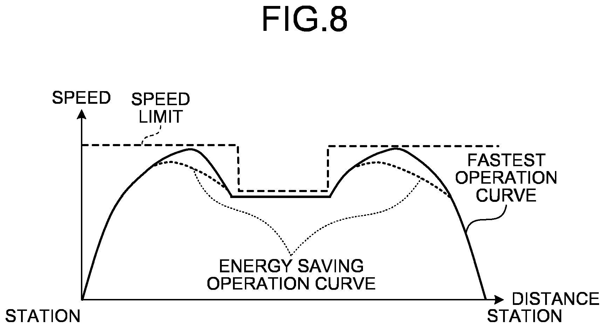

The following describes the processing performed by the operation curve generation device 12 according to the embodiment to generate the energy saving operation curve with reference to FIGS. 6 to 8. FIG. 6 is a flowchart illustrating a flow of the processing performed by the operation curve generation device according to the second embodiment to detect the deceleration energy saving range. FIGS. 7A and 7B are schematic diagrams for explaining the processing performed by the operation curve generation device according to the second embodiment to generate the energy saving operation curve. FIG. 8 is a schematic diagram illustrating an example of the energy saving operation curve generated by the operation curve generation device according to the second embodiment. Specifically, in each of FIGS. 7A, 7B, and 8, the ordinate axis represents the speed of the train while the abscissa axis represents the running distance of the train running between the stations. The fastest operation curve illustrated in each of FIGS. 7A, 7B, and 8 represents a relation between the running distance and the speed of the train running between the stations.

In the embodiment, the deceleration energy saving range detector 120 sets, out of the multiple deceleration target ranges, the deceleration target range in which the energy consumption of the train is not increased by the second processing, and the deceleration target range in which a decreased amount of the energy consumption of the train by the first processing and an increased amount of the energy consumption of the train by the second processing are equal to each other to be the certain deceleration target ranges in each of which the energy saving sensitivity is obtained (step S601).

The certain deceleration target range is the deceleration target range in which the energy consumption of the train is not increased by the second processing using the certain operation curve as a reference, in other words, the deceleration target range in which an increased amount $\Delta E_2$ of the energy consumption of the train by the second processing using the certain operation curve as a reference is equal to or smaller than "zero". For example, as illustrated in FIG. 7A, the deceleration energy saving range detector 120 sets the deceleration target range (the deceleration target range in which the increased amount $\Delta E_2$ is "zero") including the sections 8 and 9 to be the deceleration target range out of the sections 1 to 10 divided between the stations by the certain distance, and obtains the energy saving sensitivity in the deceleration target range including the sections 8 and 9. For another example, as illustrated in FIG. 7B, the deceleration energy saving range detector 120 sets the deceleration target range (the deceleration target range in which the increased amount $\Delta E_2$ is "zero") including the sections 10 and 11 to be the deceleration target range out of the sections 1 to 13, each of which is the running section per the certain running time when the train runs in accordance with the fastest operation curve between the stations, and obtains the energy saving sensitivity in the deceleration target range including the sections 10 and 11. The case in which the increased amount $\Delta E_2$ of the energy consumption of the train by the second processing is equal to smaller than "zero" can be achieved by a case in which the speed of the train is accelerated utilizing a descending slope, for example.

The certain deceleration target range is the deceleration target range in which the increased amount $\Delta E_2$ of

the energy consumption of the train by the second processing is equal to or smaller than a decreased amount $\Delta E_1$ of the energy consumption of the train by the first processing using the certain operation curve serving as a reference. For example, as illustrated in FIG. 7A, the deceleration energy saving range detector 120 does not set the deceleration target range (the deceleration target range in which the increased amount $\Delta E_2$ is not cancelled by the decreased mount $\Delta E_1$) including the sections 6 and 7 to be the certain deceleration target range. The deceleration energy saving range detector 120 sets the deceleration target range other than the deceleration target range including the sections 6 and 7 to be the certain deceleration target range, and obtains the energy saving sensitivity.

As described above, the deceleration target range in which the increased amount $\Delta E_2$ of the energy consumption of the train by the second processing using the certain operation curve as a reference is equal to or smaller than "zero", and the deceleration target range in which the increased amount $\Delta E_2$ of the energy consumption of the train by the second processing is equal to or smaller than the decreased mount $\Delta E_1$ of the energy consumption of the train by the first processing using the certain operation curve as a reference are set to be the certain deceleration target ranges. In other words, out of the respective deceleration target ranges, the section in which the decreased mount of the energy consumption caused by a deceleration amount increased with respect to the certain operation curve is larger than the increased amount of the energy consumption caused by an acceleration amount increased with respect to the certain operation curve is set to the certain deceleration target range. As a result, the deceleration target range in which energy equal to or larger than the energy consumption reduced by the deceleration of the train is not needed when the speed of the train is recovered toward the end of the deceleration target range (in other words, the deceleration target range in which the energy saving sensitivity is easily increased) can be set to be the certain deceleration target range.

The deceleration energy saving range detector 120 repeats the calculation of the energy saving sensitivity for all of the deceleration target ranges set to be the certain deceleration target ranges. The deceleration energy saving range detector 120 determines the deceleration target range having the highest calculated energy saving sensitivity out of the deceleration target ranges set to be the certain deceleration target ranges to be the deceleration energy saving range. Thereafter, the operation curve updating unit 122 generates the energy saving operation curve (refer to FIG. 8) in which the train is decelerated by a certain speed in the determined energy saving ranges (e.g., the deceleration target range including the sections 3 and 4 illustrated in FIG. 7A and the deceleration target range including the sections 8 and 9 illustrated in FIG. 7A) using the fastest operation curve as a reference.

As described above, the operation curve generation device 12 according to the second embodiment does not need to obtain the energy saving sensitivity for each of the deceleration target ranges other than the certain deceleration target ranges in the multiple deceleration target ranges. As a result, the processing load on the operation curve generation device 12 for processing to obtain the energy saving sensitivities can be reduced.


Third Embodiment

A third embodiment is an example where a certain speed is set to such a speed that regeneration energy generated when the train is decelerated using the certain operation curve as a reference is consumed by an external load. In the following description, the description of the same part as the first embodiment is omitted.

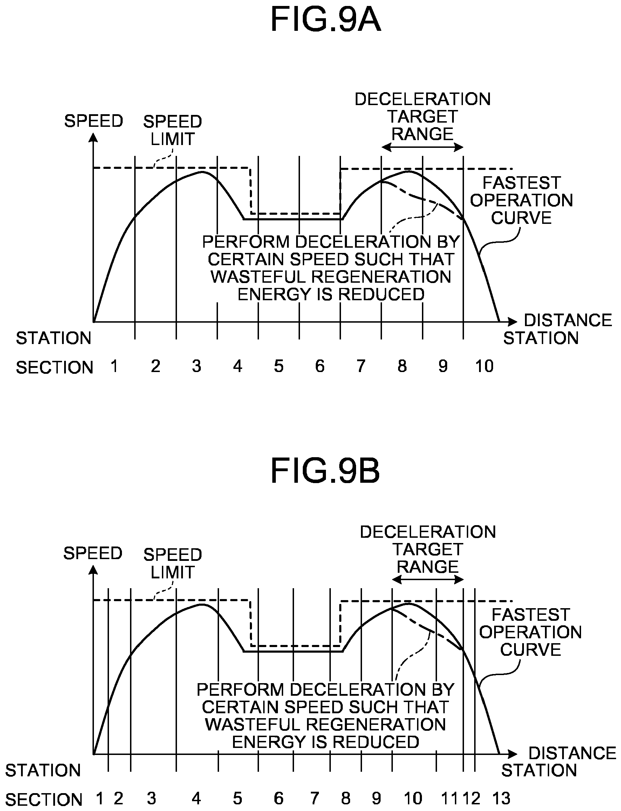

FIGS. 9A and 9B are schematic diagrams for explaining the processing performed by the operation curve generation device according to the third embodiment to generate the energy saving operation curve. Specifically, in each of FIGS. 9A and 9B, the ordinate axis represents the speed of the train while the abscissa axis represents the running distance of the train running between the stations. The fastest operation curve illustrated in each of FIGS. 9A and 9B represents a relation between the running distance and the speed of the train running between the stations. In the embodiment, as illustrated in FIG. 9A, the deceleration energy saving range detector 120 sets the multiple consecutive sections (e.g., the sections 8 and 9) to be the deceleration target range out of the sections 1 to 10 divided between the stations by a certain distance, in the same manner as the first embodiment. Alternatively, as illustrated in FIG. 9B, the deceleration energy saving range detector 120 sets the multiple consecutive sections (e.g., the sections 10 and 11) to be the deceleration target range out of the sections 1 to 13, each of which is the running section per a certain running time when the train runs between the stations in accordance with the fastest operation curve.

The deceleration energy saving range detector 120 determines, for each of the deceleration target ranges, a certain speed such that the regeneration energy generated when the train is decelerated using the certain operation curve as a reference is consumed by an external load (e.g., a railroad signal). The deceleration energy saving range detector 120 obtains, for each of the deceleration target ranges, the energy saving sensitivity when the speed of the train in the deceleration target range is decelerated by the certain speed determined for the deceleration target range using the certain operation curve as a reference. In other words, the deceleration energy saving range detector 120 obtains the energy saving sensitivity taking into consideration the regeneration energy generated when the train is decelerated. The external load may be zero.

As described above, the operation curve generation device 12 according to the third embodiment determines a certain speed such that the regeneration energy generated when the train is decelerated is effectively utilized, thereby making it possible to eliminate wasteful regeneration energy generated when the train is decelerated.

Fourth Embodiment

A fourth embodiment is an example where the deceleration target range is set to the section other than the section in which a second energy saving sensitivity (an example of a second change rate) is equal to or smaller than a certain energy saving sensitivity (an example of a certain change rate) when the train is decelerated by a certain speed using the certain operation curve as a reference. The second energy saving sensitivity is a change rate of the energy consumption of the train in the section based on the linear data and the train data. In the following description, the description of the same part as the first embodiment is omitted.

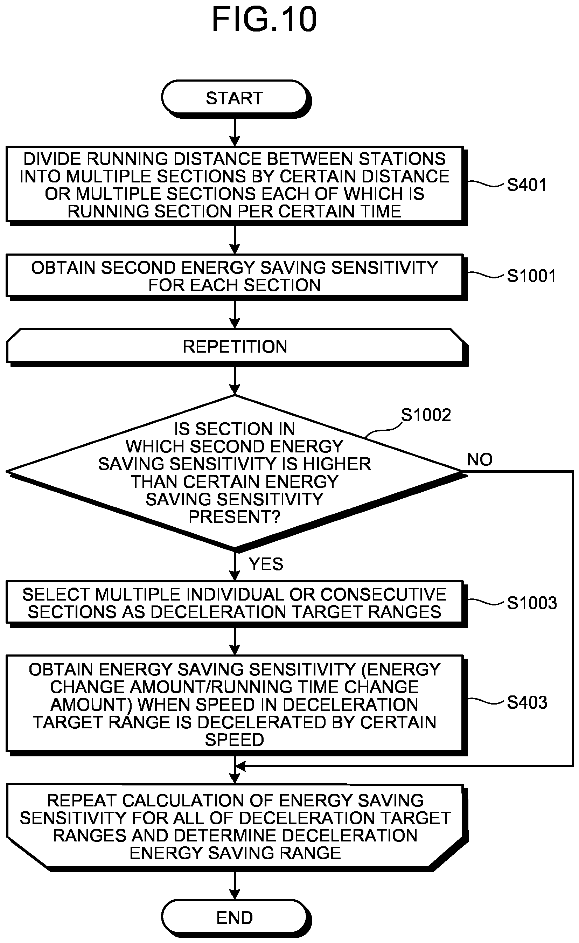

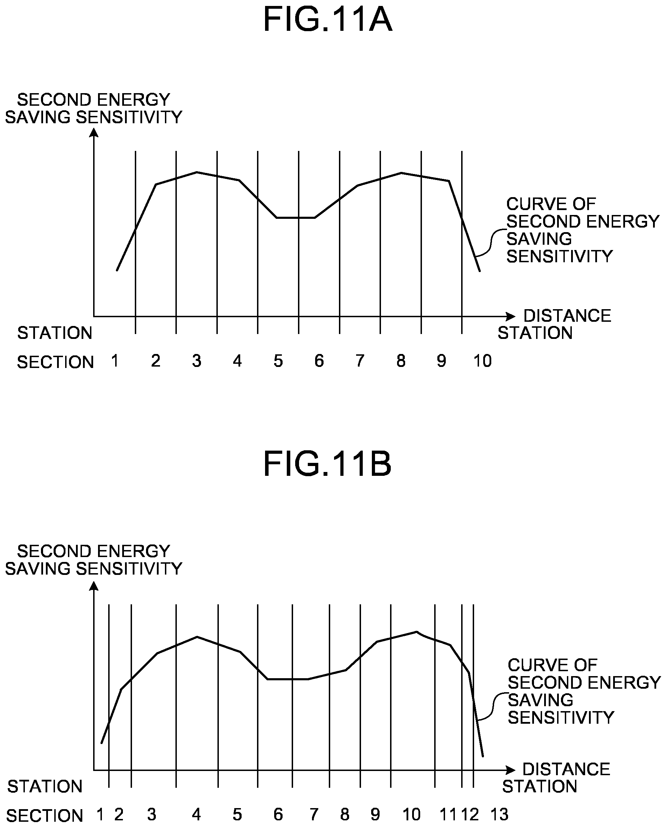

FIG. 10 is a flowchart illustrating a flow of the processing performed by the operation curve generation device according to the fourth embodiment to detect the deceleration energy saving range. FIGS. 11A and 11B are schematic diagrams each illustrating the curve of the second energy saving sensitivity obtained by the operation curve generation device according to the fourth embodiment. Specifically, in each of FIGS. 11A and 11B, the ordinate axis represents the second energy saving sensitivity in each section while the abscissa axis represents the running distance of the train running between the stations. The graph illustrated in each of FIGS. 11A and 11B is the curve (the curve of the second energy saving sensitivity) that represents a relation between the second energy saving sensitivity of each section between the stations and the running distance of the train. In the embodiment, the deceleration energy saving range detector 120 obtains, for each of the multiple sections divided between the stations, on the basis of the linear data and the train data, the second energy saving sensitivity (an example of the second change rate), which is a change rate of the energy consumption when the speed of the train in each section is decelerated by a certain speed using the certain operation curve as a reference (step S1001).

Specifically, the deceleration energy saving range detector 120 calculates, for each of the sections, the second energy saving sensitivity on the basis of the following expression (2). For example, the deceleration energy saving range detector 120 calculates the second energy saving sensitivity for each of the sections 1 to 10 divided between the stations by a certain distance as illustrated in FIG. 11A. For another example, the deceleration energy saving range detector 120 calculates the second energy saving sensitivity for each of the sections 1 and 13, each of which is the running section per a certain running time when the train runs between the stations in accordance with a certain operation curve, as illustrated in FIG. 11B.

$$Second\ energy\ saving\ sensitivity = second\ energy\ change\ amount\ (J)/second\ running\ time\ change\ amount\ (second)\quad (2)$$

The second energy change amount is a difference between the energy consumption of the train when the train runs in a section in accordance with the certain operation curve and the energy consumption of the train when the train runs in the section by being decelerated by a certain speed using the certain operation curve as a reference.

The second running time change amount is a difference between the running time when the train runs in the section in accordance with the certain operation curve and the running time when the train runs in the section by being decelerated by the certain speed using the certain operation curve as a reference.

The deceleration energy saving range detector 120 determines whether the section in which the second energy saving sensitivity is higher than a certain energy saving sensitivity (an example of a certain change rate) is present in the multiple sections (step S1002). The certain energy saving sensitivity is the preset energy saving sensitivity. In the embodiment, the certain energy saving sensitivity is an average of the second energy saving sensitivities in the respective sections.

If the sections in each of which the second energy saving sensitivity is higher than the certain energy saving sensitivity are present in the multiple sections (Yes at step S1002), the deceleration energy saving range detector 120 sets a plurality of individual or consecutive sections out of the sections in each of which the second energy saving sensitivity is higher than the certain energy saving sensitivity to be the deceleration target ranges (step S1003). In other words, the deceleration energy saving range detector 120 sets the sections other than the section in which the second energy saving sensitivity is equal to or smaller than the certain energy saving sensitivity to be the deceleration target ranges.

As described above, the operation curve generation device 12 according to the fourth embodiment does not calculate the energy saving sensitivity for the deceleration target range in which the energy saving sensitivity is probably low, thereby making it possible to prevent the execution of wasteful calculations.

Fifth Embodiment

A fifth embodiment is an example where processing to obtain a solution candidate is performed for each of the combinations of passing-through speeds that allow the train to pass through a boundary and the passing-through speeds at boundaries before the boundary in accordance with the passing-through order of the train for a plurality of boundaries (examples of a passing-through location) from a departure station (an example of a first location) to a terminal station (an example of a second location), the solution candidate including the running time of the train running in accordance with an operation curve candidate of the train based on the combination and the energy consumption of the train based on the linear data and the train data when the train runs in accordance with the operation curve candidate, and the operation curve candidate of the train based on the combination corresponding to the solution candidate having the least energy consumption in the solution candidates obtained for the last boundary is generated as the energy saving operation curve.

In other words, the fifth embodiment is an example where the passing-through speed at each boundary of a plurality of deceleration target ranges is obtained for each of a case in which the train runs fastest between the stations, a case in which the train runs in a permissible maximum running time between the stations, and a case in which the train runs in a range from the fastest running time and the maximum running time on the basis of the train data, combinations of the passing-trough speeds at a first boundary and the passing-through speeds at a second boundary through which the train passes after the first boundary are obtained on the basis of the obtained passing-through speeds, and when a plurality of same combinations of the passing-through speed at the second boundary and the running time to the second boundary are present, the combination having the least energy consumption is selected, the combination is selected in which the energy consumption between the stations is a minimum that is obtained using the linear data and the train data and utilizing the combinations of the multiple passing-through speeds at the respective obtained and selected boundaries, and the energy saving operation curve is generated on the basis of the selected combination. In the following description, the description of the same part as the first embodiment is omitted.

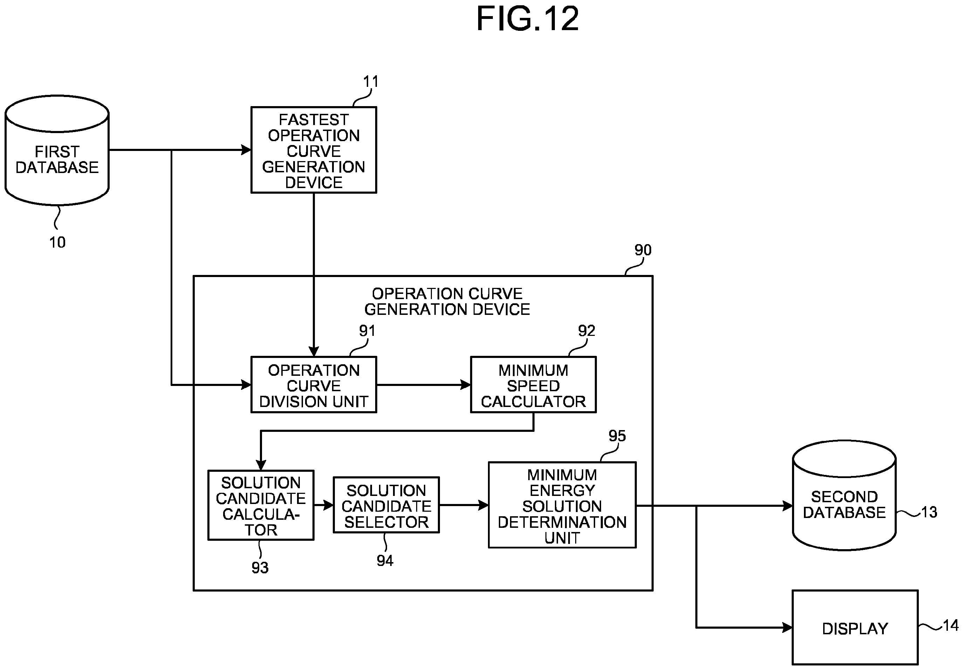

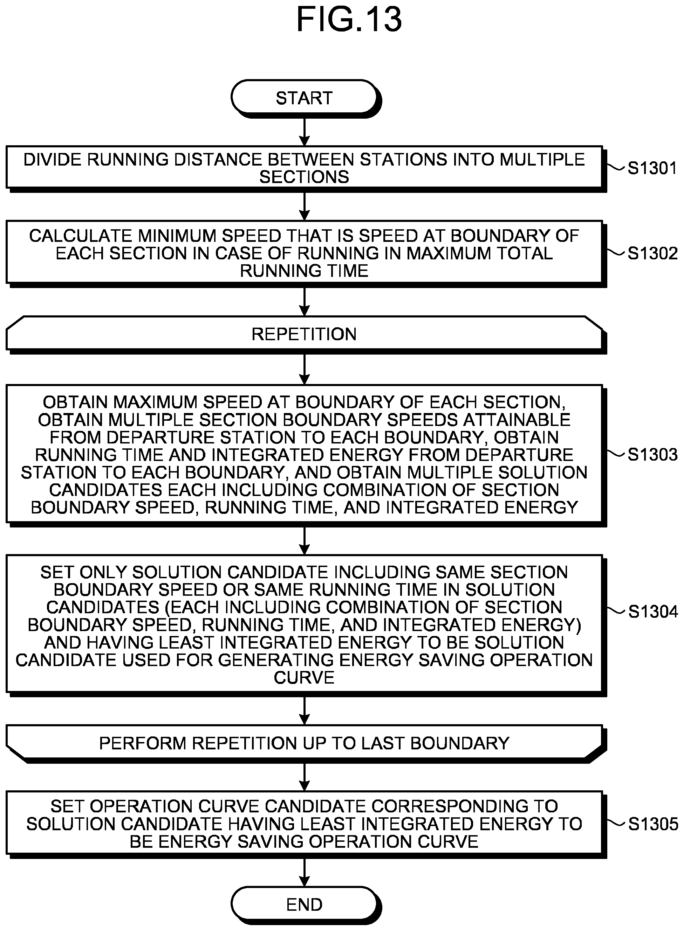

The following describes an outline of a flow of processing performed by an operation curve generation device 90 according to the embodiment to generate the energy saving operation curve with reference to FIGS. 12 to 13. FIG. 12 is a block diagram illustrating a structure of an operation curve generation system having the operation curve generation device according to the fifth embodiment. FIG. 13 is a flowchart illustrating an outline of the flow of the processing performed by the operation curve generation device according to the fifth embodiment to generate the energy saving operation curve.

In the embodiment, as illustrated in FIG. 12, the operation curve generation device 90 includes an operation curve division unit 91, a minimum speed calculator 92, a solution candidate calculator 93, a solution candidate selector 94, and a minimum energy solution determination unit 95. When the generation of the energy saving operation curve is instructed, the operation curve division unit 91 acquires, from the first database 10, the maximum total running time, the linear data, and the train data. The operation curve division unit 91 further acquires the fastest operation curve generated by the fastest operation curve generation device 11.

The operation curve division unit 91 divides the running distance between the stations into a plurality of sections (step S1301). In the embodiment, the operation curve division unit 91 divides the running distance between the stations into a plurality of sections by a certain distance in the same manner as the first embodiment. Alternatively, the operation curve division unit 91 may divide the running distance between the stations into a plurality of sections each of which is the running section per a certain running time when the train runs in accordance with the fastest operation curve, in the same manner as the first embodiment.

The minimum speed calculator 92 calculates a minimum speed that is the speed of the train at each of the boundaries (examples of the passing-through location) of the multiple sections when the train runs between the stations in the maximum total running time (step S1302). In the embodiment, the boundaries of the multiple sections are the passing-through locations. The passing-through locations are not limited to the boundaries. Any passing-through location present between the departure station (an example of the first location) and the terminal station (an example of the second location) may be used. For example, the location preset between the departure station and the terminal station may be used as the passing-through location.

The solution candidate calculator 93 and the solution candidate selector 94 perform the following processing (at step S1303 and at step S1304) for the multiple boundaries between the departure station and the terminal station in accordance with the passing-trough order of the train. The solution candidate calculator 93 (an example of a processor) calculates a maximum speed that is the speed of the train at the first boundary when the train runs in accordance with the fastest operation curve (step S1303). The solution candidate calculator 93 obtains, for the first boundary, a section boundary speed that is the passing-through speed of the train and is capable of being accelerated until the train reaches the first boundary from the departure station (step S1303). In the embodiment, the solution candidate calculator 93 obtains a plurality of section boundary speeds, each of which is equal to or smaller than the maximum speed at the first boundary and equal to or larger than the minimum speed at the first boundary.

The solution candidate calculator 93 further obtains, for each of the obtained section boundary speeds, the operation curve candidate that is the candidate of the operation curve from the departure station to the first boundary when the speed of the train is changed to the first boundary speed until the train reaches the first boundary from the departure station. The solution candidate calculator 93 then obtains the energy consumption (hereinafter, described as the integrated energy) of the train and the running time when the train runs from the departure station to the first boundary in accordance with the obtained operation curve candidate on the basis of the linear data and the train data (step S1303). The solution candidate calculator 93 performs, for each section boundary speed at the first boundary, processing to obtain the solution candidate including the integrated energy and the running time that are obtained for the section boundary speed (step S1303). In the embodiment, the solution candidate calculator 93 causes the respective solution candidates obtained for the respective section boundary speeds at the first boundary to include the section boundary speeds corresponding to the respective solution candidates.

The solution candidate selector 94 employs all of the multiple solution candidates obtained for the first boundary as the solution candidates (hereinafter, described as the previous solution candidates) used for generating the energy saving operation curve (step S1304).

The solution candidate calculator 93 obtains, for the next boundary (in this case, the second boundary) from the departure station serving as a reference, a plurality of section boundary speeds, each of which is the speed of the train capable of being changed from the section boundary speed of the previous solution candidate of the last boundary (in this case, the first boundary) until the train reaches the second boundary, and equal to or smaller than the maximum speed at the second boundary and equal to or larger than the minimum speed at the second boundary (step S1303).

The solution candidate calculator 93 further obtains, for each of the combinations of the section boundary speeds included in the previous solution candidates and the section boundary speeds at the second boundary, the operation curve candidate for running from the departure station to the second boundary based on the combination. The solution candidate calculator 93 then obtains the integrated energy of the train and the running time when the train runs from the departure station to the second boundary in accordance with the obtained operation curve candidate on the basis of the linear data and the train data (step S1303). The solution candidate calculator 93 performs processing for the respective combinations of the section boundary speeds included in the previous solution candidates and the section boundary speeds at the second boundary to obtain a plurality of solution candidates each including the integrated energy and the running time (step S1303). In the embodiment, the solution candidate calculator 93 causes the respective solution candidates obtained for the second boundary to include the combinations (in this case, the combinations of the section boundary speeds included in the previous solution candidates and the section boundary speeds at the second boundary) corresponding to the respective solution candidates.

The solution candidate selector 94 (an example of a selector) sets the multiple solution candidates obtained for the second boundary (i.e., the boundary for which the processing to obtain the solution candidates are performed last) to be the previous solution candidates used for generating the energy saving operation curve prior to the processing to obtain the solution candidates for the next boundary (step S1304). When a plurality of solution candidates each of which corresponds to the same combination of the section boundary speed at the second boundary (the boundary for which the processing is performed last) and includes the same running time are obtained, the solution candidate selector 94 sets only the solution candidate having the least integrated energy in the multiple solution candidates to be the previous solution candidate.

In other words, when a plurality of solution candidates each of which corresponds to the same combination of the section boundary speed at the boundary for which the processing to obtain the solution candidates is performed last and includes the same running time are obtained, the solution candidate selector 94 excludes the combinations other than the combination corresponding to the solution candidate having the least integrated energy from the objects to be subjected to the processing to obtain the solution candidates for the boundaries after the next boundary, prior to the processing to obtain the solution candidates for the next boundary. As a result, the number of combinations serving as the objects to be subjected to the processing to obtain the solution candidates for the next boundary can be reduced, thereby making it possible to reduce the load of the processing performed by the operation curve generation device 90 to obtain the solution candidates.

The solution candidate calculator 93 and the solution candidate selector 94 repeat the processing at step S1303 and at step S1304 until the solution candidates are obtained for the last boundary from the departure station serving as a reference.

The minimum energy solution determination unit 95 (an example of a generator) selects the operation curve candidate following the combination of the section boundary speeds corresponding to the solution candidate having the least integrated energy out of the multiple solution candidates obtained for the last boundary (step S1305). The minimum energy solution determination unit 95 generates the selected operation curve candidate as the energy saving operation curve (an example of the operation curve).

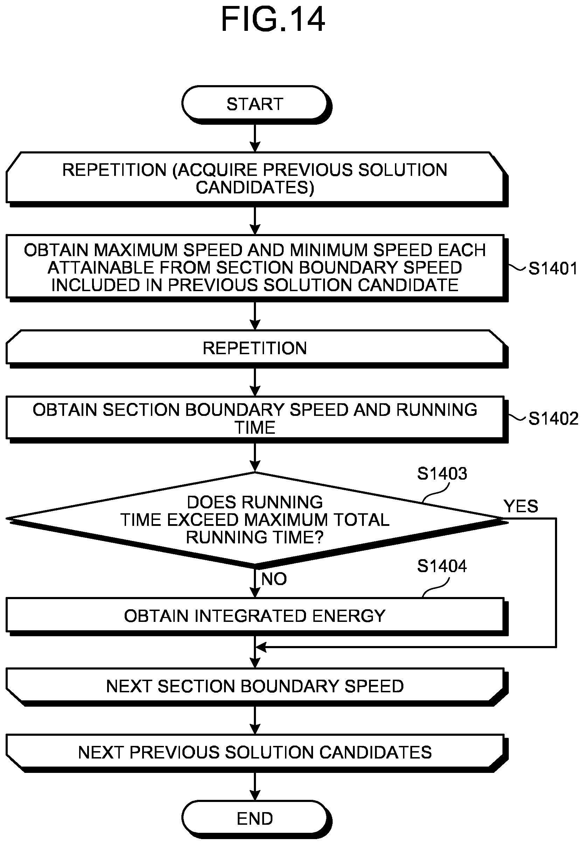

The following describes processing performed by the solution candidate calculator 93 included in the operation curve generation device 90 according to the embodiment to obtain the solution candidates with reference to FIG. 14.

FIG. 14 is a flowchart illustrating a flow of the processing performed by the solution candidate calculator included in the operation curve generation device according to the fifth embodiment to obtain the solution candidates.

When the boundary for which the solution candidates are obtained (hereinafter, described as a current boundary) is the first boundary from the departure station, the solution candidate calculator 93 acquires the speed of the train at the departure station. When the current boundary is the boundary after the second boundary from the departure station, the solution candidate calculator 93 acquires the previous solution candidates.

When the current boundary is the first boundary from the departure station, the solution candidate calculator 93 obtains a maximum speed that is equal to or smaller than the maximum speed obtained for the first boundary and is attainable from the speed of the train at the departure station until the train reaches the first boundary, and a minimum speed that is equal to or larger than the minimum speed obtained for the first boundary and is attainable from the speed of the train at the departure station until the train reaches the first boundary (step S1401). When the current boundary is the boundary after the second boundary from the departure station, the solution candidate calculator 93 obtains a maximum speed that is equal to or smaller than the maximum speed obtained for the second boundary and is attainable from the section boundary speed at the last boundary included in the previous solution candidate until the train reaches the current boundary, and a minimum speed that is equal to or larger than the minimum speed obtained for the second boundary and is attainable from the section boundary speed at the last boundary included in the previous solution candidate until the train reaches the current boundary.

The solution candidate calculator 93 obtains the section boundary speed, which is between the obtained maximum speed and minimum speed (step S1402). The solution candidate calculator 93 obtains, for each of the combinations of the section boundary speeds included in the previous solution candidates and the obtained section boundary speed, the operation curve candidate for the train running from the departure station to the current boundary on the basis of the combination. The solution candidate calculator 93 obtains the running time of the train running from the departure station to the current station in accordance with the obtained operation curve candidate (step S1402).

If the obtained running time is equal to or smaller than the maximum total running time (No at step S1403), the solution candidate calculator 93 obtains the integrated energy of the train running from the departure station to the current station in accordance with the operation curve candidate on the basis of the linear data and the train data (step S1404). The solution candidate calculator 93 thus obtains the solution candidate that includes the combination of the section boundary speed included in the previous solution candidate and the section boundary speed of the current boundary, the running time, and the integrated energy.

In contrast, if the obtained running time exceeds the maximum total running time (Yes at step S1403), the solution candidate calculator 93 discards the obtained section boundary speed, and the processing returns to step S1402, at which the solution candidate calculator 93 obtains the section boundary speed different from the discarded section boundary speed. The solution candidate calculator 93 repeats the processing from step S1402 to step S1404 for the current boundary by the certain number of times.

The solution candidate calculator 93 performs the processing from step S1401 to step S1404 on the other boundaries between the stations.

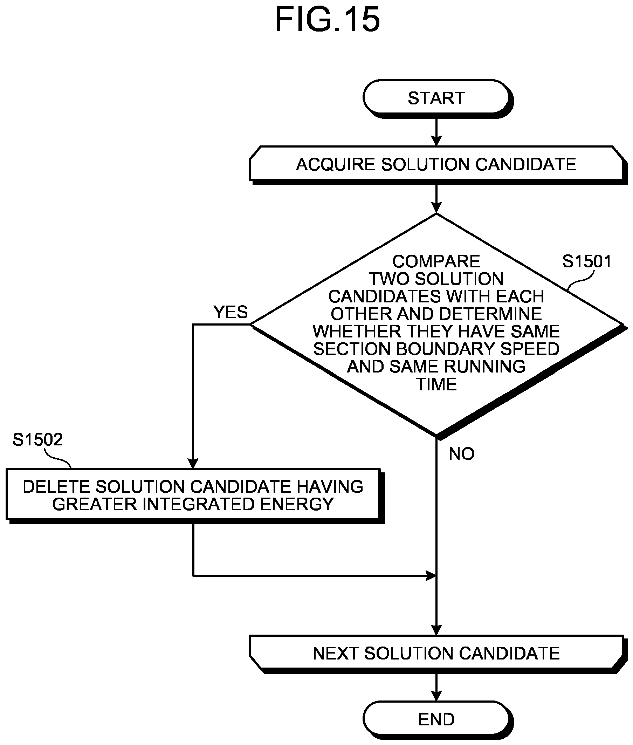

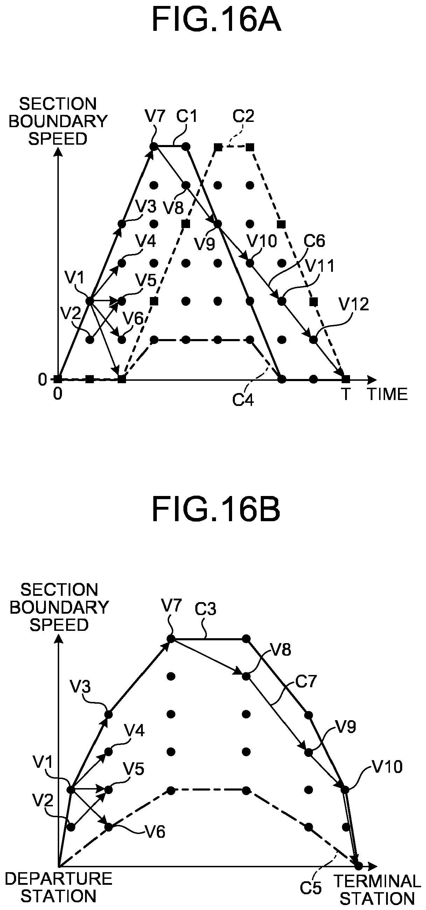

The following describes the processing performed by the solution candidate selector 94 included in the operation curve generation device 90 according to the embodiment to select the solution candidate with reference to FIGS. 15, 16A, and 16B. FIG. 15 is a flowchart illustrating a flow of the processing performed by the solution candidate selector included in the operation curve generation device according to the fifth embodiment to select the solution candidate. FIGS. 16A and 16B are schematic diagrams each illustrating an example of the section boundary speeds at the respective boundaries obtained by the solution candidate calculator included in the operation curve generation device according to the fifth embodiment.

FIG. 16A is a schematic diagram illustrating an example of the section boundary speeds at respective running times (respective boundaries) in a maximum total running time T. FIG. 16B is a schematic diagram illustrating an example of the section boundary speeds at respective boundaries of a plurality of sections divided between the stations by a certain distance. In FIGS. 16A and 16B, the section boundary speeds at the respective boundaries in operation curves (fastest operation curves) C1, C2, and C3 are the maximum speeds at the respective boundaries. In FIGS. 16A and 16B, the section boundary speeds at the respective boundaries in operation curves C4 and C5 are the minimum speeds when the train runs between the stations in the maximum total running time.

When a plurality of solution candidates including the combinations of the section boundary speeds (e.g., section boundary speeds V1 and V2 at the first boundary) included in the previous solution candidates and the section boundary speeds at the current boundary (e.g., section boundary speeds V3 to V6 at the second boundary) are obtained, the solution candidate selector 94 acquires any of the multiple solution candidates (e.g., the solution candidate including the combination of the section boundary speeds V1 and V5). The solution candidate selector 94 compares the acquired solution candidate with the other solution candidates obtained for the current boundary (step S1501).

When another solution candidate is present that includes the same combination of the section boundary speed V5, which is the section boundary speed at the current boundary and included in the acquired solution candidate, and the same running time as that included in the acquired solution candidate (e.g., the solution candidate including the combination of the section boundary speeds V2 and V5) (Yes at step S1501), the solution candidate selector 94 deletes the solution candidate having greater integrated energy (e.g., the other solution candidate) out of the other solution candidate and the acquired solution candidate (step S1502).

The solution candidate selector 94 repeats the processing at step S1501 and at step S1502 until no solution candidate including the section boundary speed obtained for the current boundary and the same running time remains among the multiple solution candidates obtained for the current boundary. Thus, when a plurality of solution candidates are obtained each of which includes the same combination of the section boundary speed at the current boundary and the same running speed, the solution candidate selector 94 excludes the combinations other than the combination corresponding to the solution candidate having the least integrated energy from the objects to be subjected to the processing to obtain the solution candidates for the boundaries after the next boundary, prior to the processing to obtain the solution candidates for the next boundary.

When the solution candidates are obtained for all of the boundaries, the minimum energy solution determination unit 95 generates, as an energy saving operation curve C6, the operation curve candidate of the train based on the combination (of the section boundary speeds V1, V3, V7, V8, V9, V10, V11, and V12) included in the solution candidate having the least integrated energy out of the multiple solution candidates obtained for the last boundary. Alternatively, when the solution candidates are obtained for all of the boundaries, the minimum energy solution determination unit 95 generates, as an energy saving operation curve C7, the operation curve candidate of the train based on the combination (of the section boundary speeds V1, V3, V7, V8, V9, and V10) included in the solution candidate having the least integrated energy out of the multiple solution candidates obtained for the last boundary.

As described above, the operation curve generation device 90 according to the fifth embodiment can reduce the number of combinations of section boundary speeds, the combinations serving as the objects to be subjected to the processing to obtain the solution candidates for the next boundary, in the processing to obtain the solution candidates for each boundary, thereby making it possible to reduce the load of the processing performed by the operation curve generation device 90 to obtain the solution candidates.

As described above, the first to the fourth embodiments can reduce energy consumption by decelerating the train in the section in which the energy saving sensitivity is high between the stations, thereby making it possible to achieve sufficient energy saving. The fifth embodiment can reduce the load of the processing performed by the operation curve generation device 90 to obtain the solution candidates.

Programs executed by the operation curve generation devices 12 and 90 of the embodiments are embedded and provided in a ROM (Read Only Memory), for example. The programs executed by the operation curve generation devices 12 and 90 of the embodiments may be recorded and provided on a computer-readable recording medium such as a compact disc ROM (CD-ROM), a flexible disk (FD), a CD-recordable (CD-R), and a digital versatile disc (DVD) as an installable or executable file.

The programs executed by the operation curve generation devices 12 and 90 of the embodiments may be stored in a computer connected to a network such as the Internet, and provided by being downloaded via the network. The programs executed by the operation curve generation devices 12 and 90 of the embodiments may be provided or distributed via a network such as the Internet.

The programs executed by the operation curve generation devices 12 and 90 of the embodiments have a module structure including the above-described units (the deceleration energy saving range detector 120, the repeated execution unit 121, and the operation curve updating unit 122). In actual hardware, a central processing unit (CPU) reads the programs from the ROM and executes the programs. Once the programs are executed, the above-described units are loaded into a main storage device, so that the deceleration energy saving range detector 120, the repeated execution unit 121, and the operation curve updating unit 122 are formed in the main storage device.

While the embodiments of the present invention have been described, the embodiments have been presented by way of examples only, and are not intended to limit the scope of the invention. The novel embodiments described herein may be embodied in a variety of other forms. Furthermore, various omissions, substitutions, and changes of the embodiments described herein may be made without departing from the spirit of the invention. The accompanying claims and their equivalents are intended to cover the embodiments or the modifications thereof as would fall within the scope and spirit of the invention.

**Claims**

1. An information processing device, comprising:

   a storage that stores therein linear data including a slope and a curve for each set of certain locations, and train data including an acceleration-deceleration characteristic; and

an operation curve generator, wherein
the operation curve generator sets a plurality of deceleration section candidates on the basis of information about the set of certain locations stored in the storage, obtains, for each of the deceleration section candidates, a change rate of energy consumption when deceleration is performed by a certain speed using a preset operation curve, the linear data, and the train data, selects a section in which the change rate of energy consumption is the largest in the obtained change rates of energy consumption out of the deceleration section candidates, and updates the preset operation curve utilizing the selected deceleration section and the certain speed.

2. The information processing device according to claim 1, wherein the operation curve generator calculates a running time between the certain locations on the basis of the updated operation curve, obtains, in a case in which the calculated running time is in a predetermined maximum running time, the change rate of energy consumption when the deceleration is performed by the certain speed using the deceleration section candidates, the linear data, and the train data that are stored in the storage and the updated operation curve, selects the section in which the change rate of energy consumption is the largest in the obtained change rates of energy consumption out of the deceleration section candidates, and updates the preset operation curve utilizing the selected deceleration section and the certain speed.

3. The information processing device according to claim 1, wherein the deceleration section candidate is a section, in each of a plurality of sections divided between the certain locations, in which a decreased amount of energy consumption caused by a deceleration amount increased with respect to the preset operation curve is larger than an increased amount of energy consumption caused by an acceleration amount increased with respect to the preset operation curve.

4. The information processing device according to claim 1, wherein the certain speed is set in such a range that regeneration energy increased by deceleration is consumed by an external load.

5. An information processing device, comprising:

a storage that stores therein linear data including a slope and a curve for each set of certain locations, and train data including an acceleration-deceleration characteristic; and
an operation curve generator, wherein the operation curve generator sets, on the basis of information about the set of certain locations stored in the storage, a plurality of sections divided between the locations, obtains a passing-through speed at each boundary of the sections for each of a case of running between the certain locations fastest, a case of running between the certain locations in a permissible maximum running time, and a case of running in a range from the fastest running to the running in the maximum running time on the basis of the train data, obtains, on the basis of the obtained passing-through speeds, combinations of the passing-through speeds at a first boundary and the passing-through speeds at a second boundary passed through next to the first boundary, and when a plurality of same combinations of the passing-through speed at the second boundary and the running time to the second boundary are present, selects the combination having the least energy consumption, selects the combination, by utilizing the combinations of the multiple passing-through speeds at the respective obtained and selected boundaries, in which the energy consumption between the certain locations is a minimum that is obtained using the linear data and the train data, and generates the operation curve on the basis of the selected combination.

6. An operation curve generation method that uses linear data including a slope and a curve for each set of certain locations and train data including an acceleration-deceleration characteristic, the linear data and the train data being stored in a storage, the operation curve generation method comprising:

setting a plurality of deceleration section candidates between the certain locations stored in the storage;
obtaining, for each of the deceleration section candidates, a change rate of energy consumption when deceleration is performed by a certain speed using a preset operation curve, the linear data, and the train data;
selecting a section in which the change rate of energy consumption is the largest in the obtained change rates of energy consumption out of the deceleration section candidates; and
updating the preset operation curve utilizing the selected deceleration section and the certain speed.

7. An operation curve generation method that uses linear data including a slope and a curve for each set of certain locations and train data including an acceleration-deceleration characteristic, the linear data and the train data being stored in a storage, the operation curve generation method comprising:

setting a plurality of sections divided between the certain locations stored in the storage;

obtaining a passing-through speed at each boundary of the sections for each of a case of running between the certain locations fastest, a case of running between the certain locations in a permissible maximum running time, and a case of running in a range from the fastest running to the running in the maximum running time on the basis of the train data;

obtaining, on the basis of the obtained passing-through speeds, combinations of the passing-through speeds at a first boundary and the passing-through speeds at a second boundary passed through next to the first boundary, and when a plurality of same combinations of the passing-through speed at the second boundary and the running time to the second boundary are present, selecting the combination having the least energy consumption;

selecting the combination, by utilizing the combinations of the multiple passing-through speeds at the respective obtained and selected boundaries, in which the energy consumption between the certain locations is a minimum that is obtained using the linear data and the train data; and

generating the operation curve on the basis of the selected combination.

# FIG.1

# FIG.2

```
            START

          REPETITION

   DETECT DECELERATION ENERGY        S201
         SAVING RANGE

   GENERATE OPERATION CURVE          S202

   IF RUNNING TIME IS EQUAL TO OR
   SMALLER THAN MAXIMUM TOTAL
     RUNNING TIME, PERFORM
           REPETITION

             END
```

# FIG.3

SPEED    SPEED
         LIMIT

                                    FASTEST
                                    OPERATION
                                    CURVE

                                    DISTANCE
STATION                    STATION

# FIG.4

START

DIVIDE RUNNING DISTANCE BETWEEN
STATIONS INTO MULTIPLE SECTIONS BY
CERTAIN DISTANCE OR MULTIPLE
SECTIONS EACH OF WHICH IS RUNNING
SECTION PER CERTAIN TIME — S401

REPETITION

SELECT MULTIPLE INDIVIDUAL OR
CONSECUTIVE SECTIONS AS
DECELERATION TARGET RANGES — S402

OBTAIN ENERGY SAVING SENSITIVITY
(ENERGY CHANGE AMOUNT/RUNNING
TIME CHANGE AMOUNT) WHEN SPEED IN
DECELERATION TARGET RANGE IS
DECELERATED BY CERTAIN SPEED — S403

REPEAT CALCULATION OF ENERGY
SAVING SENSITIVITY FOR ALL OF
DECELERATION TARGET RANGES AND
DETERMINE DECELERATION ENERGY
SAVING RANGE

END

# FIG.5A

# FIG.5B

# FIG.6

START

DIVIDE RUNNING DISTANCE BETWEEN STATIONS INTO MULTIPLE SECTIONS BY CERTAIN DISTANCE OR MULTIPLE SECTIONS EACH OF WHICH IS RUNNING SECTION PER CERTAIN TIME ~401

REPETITION

SET, TO BE CERTAIN DECELERATION TARGET RANGE, DECELERATION TARGET RANGE IN WHICH ENERGY CONSUMPTION OF TRAIN IS NOT INCREASED BY SECOND PROCESSING AND DECELERATION TARGET RANGE IN WHICH DECREASED AMOUNT OF ENERGY CONSUMPTION OF TRAIN BY FIRST PROCESSING AND INCREASED AMOUNT OF ENERGY CONSUMPTION OF TRAIN BY SECOND PROCESSING ARE EQUAL TO EACH OTHER ~601

OBTAIN ENERGY SAVING SENSITIVITY (ENERGY CHANGE AMOUNT/RUNNING TIME CHANGE AMOUNT) WHEN SPEED IN DECELERATION TARGET RANGE IS DECELERATED BY CERTAIN SPEED ~403

REPEAT CALCULATION OF ENERGY SAVING SENSITIVITY FOR ALL OF DECELERATION TARGET RANGES AND DETERMINE DECELERATION ENERGY SAVING RANGE

END

# FIG.7A

# FIG.7B

# FIG.8

# FIG.9A

SPEED

SPEED LIMIT

DECELERATION TARGET RANGE

FASTEST OPERATION CURVE

PERFORM DECELERATION BY CERTAIN SPEED SUCH THAT WASTEFUL REGENERATION ENERGY IS REDUCED

DISTANCE

STATION

STATION

SECTION  1  2  3  4  5  6  7  8  9  10

# FIG.9B

SPEED

SPEED LIMIT

DECELERATION TARGET RANGE

FASTEST OPERATION CURVE

PERFORM DECELERATION BY CERTAIN SPEED SUCH THAT WASTEFUL REGENERATION ENERGY IS REDUCED

DISTANCE

STATION

STATION

SECTION  1 2  3  4  5  6  7  8  9  10  11 12  13

# FIG.10

```
          ┌──────────────┐
          │    START     │
          └──────┬───────┘
                 ▼
┌─────────────────────────────────────┐
│ DIVIDE RUNNING DISTANCE BETWEEN      │
│ STATIONS INTO MULTIPLE SECTIONS BY   │──S401
│ CERTAIN DISTANCE OR MULTIPLE         │
│ SECTIONS EACH OF WHICH IS            │
│ RUNNING SECTION PER CERTAIN TIME     │
└──────────────────┬──────────────────┘
                   ▼
┌─────────────────────────────────────┐
│ OBTAIN SECOND ENERGY SAVING          │──S1001
│ SENSITIVITY FOR EACH SECTION         │
└──────────────────┬──────────────────┘
                   ▼
┌─────────────────────────────────────┐
│            REPETITION                │
└──────────────────┬──────────────────┘
                   ▼
            ╱────────────╲
           ╱  IS SECTION   ╲         S1002
          ╱  IN WHICH SECOND ╲
         ╱  ENERGY SAVING      ╲  NO
        ╱  SENSITIVITY IS HIGHER ╲────────┐
        ╲  THAN CERTAIN ENERGY   ╱        │
         ╲  SAVING SENSITIVITY  ╱         │
          ╲    PRESENT?        ╱          │
           ╲────────┬────────╱           │
                    │ YES                 │
                    ▼                     │
┌─────────────────────────────────────┐  │
│ SELECT MULTIPLE INDIVIDUAL OR        │  │
│ CONSECUTIVE SECTIONS AS              │──S1003
│ DECELERATION TARGET RANGES           │  │
└──────────────────┬──────────────────┘  │
                   ▼                      │
┌─────────────────────────────────────┐  │
│ OBTAIN ENERGY SAVING SENSITIVITY     │  │
│ (ENERGY CHANGE AMOUNT/RUNNING TIME   │  │
│ CHANGE AMOUNT) WHEN SPEED IN         │──S403
│ DECELERATION TARGET RANGE IS         │  │
│ DECELERATED BY CERTAIN SPEED         │  │
└──────────────────┬──────────────────┘  │
                   ▼◄─────────────────────┘
┌─────────────────────────────────────┐
│ REPEAT CALCULATION OF ENERGY SAVING  │
│ SENSITIVITY FOR ALL OF DECELERATION  │
│ TARGET RANGES AND DETERMINE          │
│ DECELERATION ENERGY SAVING RANGE     │
└──────────────────┬──────────────────┘
                   ▼
          ┌──────────────┐
          │     END      │
          └──────────────┘
```

# FIG.11A

SECOND ENERGY
SAVING SENSITIVITY

CURVE OF
SECOND ENERGY
SAVING
SENSITIVITY

DISTANCE

STATION                                                                                           STATION

SECTION    1    2    3    4    5    6    7    8    9    10

# FIG.11B

SECOND ENERGY
SAVING SENSITIVITY

CURVE OF
SECOND ENERGY
SAVING
SENSITIVITY

DISTANCE

STATION                                                                                           STATION

SECTION  1  2   3      4     5     6     7    8    9   10   11 12  13

# FIG.12

EP 3 156 303 A1

# FIG.13

```
                    ┌─────────────┐
                    │    START    │
                    └─────────────┘
                           │
                           ▼
┌──────────────────────────────────────────────────┐
│ DIVIDE RUNNING DISTANCE BETWEEN STATIONS INTO      │── S1301
│ MULTIPLE SECTIONS                                  │
└──────────────────────────────────────────────────┘
                           │
                           ▼
┌──────────────────────────────────────────────────┐
│ CALCULATE MINIMUM SPEED THAT IS SPEED AT BOUNDARY  │
│ OF EACH SECTION IN CASE OF RUNNING IN MAXIMUM      │── S1302
│ TOTAL RUNNING TIME                                 │
└──────────────────────────────────────────────────┘
                           │
                           ▼
┌──────────────────────────────────────────────────┐
│                   REPETITION                       │
└──────────────────────────────────────────────────┘
                           │
                           ▼
┌──────────────────────────────────────────────────┐
│ OBTAIN MAXIMUM SPEED AT BOUNDARY OF EACH SECTION,  │
│ OBTAIN MULTIPLE SECTION BOUNDARY SPEEDS ATTAINABLE │
│ FROM DEPARTURE STATION TO EACH BOUNDARY, OBTAIN    │
│ RUNNING TIME AND INTEGRATED ENERGY FROM DEPARTURE  │── S1303
│ STATION TO EACH BOUNDARY, AND OBTAIN MULTIPLE      │
│ SOLUTION CANDIDATES EACH INCLUDING COMBINATION OF  │
│ SECTION BOUNDARY SPEED, RUNNING TIME, AND          │
│ INTEGRATED ENERGY                                  │
└──────────────────────────────────────────────────┘
                           │
                           ▼
┌──────────────────────────────────────────────────┐
│ SET ONLY SOLUTION CANDIDATE INCLUDING SAME SECTION │
│ BOUNDARY SPEED OR SAME RUNNING TIME IN SOLUTION    │
│ CANDIDATES (EACH INCLUDING COMBINATION OF SECTION  │
│ BOUNDARY SPEED, RUNNING TIME, AND INTEGRATED       │── S1304
│ ENERGY) AND HAVING LEAST INTEGRATED ENERGY TO BE   │
│ SOLUTION CANDIDATE USED FOR GENERATING ENERGY      │
│ SAVING OPERATION CURVE                             │
└──────────────────────────────────────────────────┘
                           │
                           ▼
┌──────────────────────────────────────────────────┐
│        PERFORM REPETITION UP TO LAST BOUNDARY      │
└──────────────────────────────────────────────────┘
                           │
                           ▼
┌──────────────────────────────────────────────────┐
│ SET OPERATION CURVE CANDIDATE CORRESPONDING TO     │
│ SOLUTION CANDIDATE HAVING LEAST INTEGRATED ENERGY  │── S1305
│ TO BE ENERGY SAVING OPERATION CURVE                │
└──────────────────────────────────────────────────┘
                           │
                           ▼
                    ┌─────────────┐
                    │     END     │
                    └─────────────┘
```

# FIG.14

```
                    ( START )
                        |
                        v
    ┌──────────────────────────────────────────┐
    │  REPETITION (ACQUIRE PREVIOUS SOLUTION     │
    │            CANDIDATES)                      │
    └──────────────────────────────────────────┘
                        |
                        v
    ┌──────────────────────────────────────────┐
    │  OBTAIN MAXIMUM SPEED AND MINIMUM SPEED EACH│     S1401
    │  ATTAINABLE FROM SECTION BOUNDARY SPEED     │
    │  INCLUDED IN PREVIOUS SOLUTION CANDIDATE    │
    └──────────────────────────────────────────┘
                        |
                        v
    ┌──────────────────────────────────────────┐
    │               REPETITION                   │
    └──────────────────────────────────────────┘
                        |
                        v
    ┌──────────────────────────────────────────┐
    │  OBTAIN SECTION BOUNDARY SPEED AND RUNNING  │     S1402
    │                TIME                        │
    └──────────────────────────────────────────┘
                        |
                        v                              S1403
              DOES RUNNING
         TIME EXCEED MAXIMUM TOTAL  ──────────────> YES
              RUNNING TIME?                           |
                        |                             |
                       NO                      S1404  |
                        v                             |
    ┌──────────────────────────────────────────┐      |
    │        OBTAIN INTEGRATED ENERGY            │      |
    └──────────────────────────────────────────┘      |
                        |<───────────────────────────┘
                        v
    ┌──────────────────────────────────────────┐
    │        NEXT SECTION BOUNDARY SPEED         │
    └──────────────────────────────────────────┘
                        |
                        v
    ┌──────────────────────────────────────────┐
    │      NEXT PREVIOUS SOLUTION CANDIDATES      │
    └──────────────────────────────────────────┘
                        |
                        v
                    ( END )
```

# FIG.15

START

ACQUIRE SOLUTION CANDIDATE

COMPARE TWO SOLUTION CANDIDATES WITH EACH OTHER AND DETERMINE WHETHER THEY HAVE SAME SECTION BOUNDARY SPEED AND SAME RUNNING TIME — S1501

YES

NO

S1502

DELETE SOLUTION CANDIDATE HAVING GREATER INTEGRATED ENERGY

NEXT SOLUTION CANDIDATE

END

# FIG.16A

# FIG.16B

**INTERNATIONAL SEARCH REPORT**

International application No.

PCT/JP2015/066259

A.    CLASSIFICATION OF SUBJECT MATTER
*B61L27/00*(2006.01)i, *B60L15/40*(2006.01)i

According to International Patent Classification (IPC) or to both national classification and IPC

B.    FIELDS SEARCHED

Minimum documentation searched (classification system followed by classification symbols)
B61L27/00, B60L15/40

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| A | JP 2003-235116 A  (Toshiba Corp.),<br>22 August 2003 (22.08.2003),<br>entire text; all drawings<br>& CN 1511744 A          & CN 1817680 A<br>& TW 277548 B            & TW 277549 B<br>& TW 200303275 A         & TW 284605 B<br>& CN 101372235 A | 1-7 |
| A | WO 2013/057969 A1  (Mitsubishi Electric Corp.),<br>25 April 2013 (25.04.2013),<br>entire text; all drawings<br>& US 2014/0222259 A1 | 1-7 |
| A | JP 2010-213383 A  (Toshiba Corp.),<br>24 September 2010 (24.09.2010),<br>entire text; all drawings<br>(Family: none) | 1-7 |

| ☒ | Further documents are listed in the continuation of Box C. | ☐ | See patent family annex. |

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    18 June 2015 (18.06.15) | Date of mailing of the international search report<br>    30 June 2015 (30.06.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/066259

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2013-82240 A  (Kyosan Electric Mfg. Co., Ltd.), 09 May 2013 (09.05.2013), entire text; all drawings (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3881302 B